# EUROPÄISCHE PATENTANMELDUNG

(11) **EP 1 357 360 A2**
(43) Veröffentlichungstag der Anmeldung: **29.10.2003**
(21) Anmeldenummer: 03006982.7
(22) Anmeldetag: 27.03.2003
(51) Int. Cl.: G01C 21/36

(54) **Verfahren zum Betreiben eines Navigationssystems sowie Datenträger für ein Navigationssystem**

(30) Priorität: 26.04.2002 DE 10218683
(71) Anmelder: ROBERT BOSCH GMBH, 70442 Stuttgart (DE)
(72) Erfinder: Duckeck, Ralf, 31134 Hildesheim (DE); Ossenkopp, Meral, 31134 Hildesheim (DE)

(57) **Zusammenfassung**

Die Erfindung betrifft ein Verfahren zum Betreiben eines Navigationssystems mit einem auswechselbaren Datenspeicher und ein Datenträger für ein solches Navigationssystem. Aufgabe der Erfindung ist es, ein Verfahren und einen Datenträger bereitzustellen, mit dem ein Navigationssystem optimal ausgenutzt werden kann. Erfindungsgemäß wird diese Aufgabe dadurch gelöst, dass auf dem Datenträger Zusatzinformationen gespeichert sind, die.von den Navigationsinformationen verschieden sind und während des Betriebes des Navigationssystems ausgegeben werden.

## Beschreibung

Die Erfindung betrifft ein Verfahren zum Betreiben eines Navigationssystems und einen Datenträger mit Daten für ein Navigationssystem gemäß der Oberbegriffe der Ansprüche 1 und 6.

Das Verfahren und der Datenträger sind für den Einsatz in Fahrzeugen, insbesondere Kraftfahrzeugen, geeignet. Darüber hinausgehende Anwendungen ergeben sich insbesondere für Expeditionen oder Urlauber, die sich in unbekannter Umgebung ungeachtet des Fortbewegungsmittels orientieren wollen.

Navigationssysteme mit und ohne Bildschirm sind schon seit längerer Zeit im Handel erhältlich. Diese Systeme benötigen für unterschiedliche Länder besondere Datenträger, vorzugsweise CDs, um eine Anpassung an den jeweiligen Standort und gegebenenfalls eine Aktualisierung der Daten vornehmen zu können. Diese Datenträger müssen zu relativ hohen Kosten erworben werden.

Bei Streckenabschnitten ohne notwendige Richtungsänderungen, beispielsweise bei langen Autobahnfahrten, bleibt das Informationssystem unverändert bzw. werden keine neuen Richtungsangaben ausgegeben. Die Ausgabeeinrichtung, beispielsweise ein Bildschirm, zeigt dann über einen langen Zeitraum das gleiche Symbol an, z.B. einen Pfeil in Geradeausrichtung. Das aufwendige Informationssystem wird in diesem Zeitraum nur in einem geringen Umfang genutzt.

Aufgabe der vorliegenden Erfindung ist es, ein Verfahren zum Betreiben eines Navigationssystems und einen entsprechenden Datenträger bereitzustellen, mit dem das System optimal auch während Fahrten ohne Richtungsänderungen genutzt werden kann und mit dem die Kosten für ein solches System gesenkt werden können.

Erfindungsgemäß wird diese Aufgabe durch ein Verfahren mit den Merkmalen des Anspruchs 1 sowie einen Datenträger mit den Merkmalen des Anspruchs 6 gelöst. Vorteilhafte Ausgestaltungen und Weiterbildungen sind in den abhängigen Unteransprüchen aufgeführt.

Durch die Ausgabe zumindest einer von der Navigationsinformation verschiedenen Zusatzinformation während des Betriebes des Navigationssystems kann der Nutzer des Navigationssystems, insbesondere ein Fahrzeugführer, unterhalten oder informiert werden, um die Monotonie zu unterbrechen. So können beispielsweise Hintergrundinformationen über die Umgebung, Sehenswürdigkeiten oder Unterhaltungsbeiträge zusätzlich oder alternativ zu den Navigationsinformationen ausgegeben werden.

In einer Weiterbildung ist es vorgesehen, dass die Zusatzinformation vor Beginn der Ausgabe der Navigationsinformation ausgegeben wird, beispielsweise zu Beginn einer Fahrt, nachdem die Route berechnet wurde. Alternativ dazu kann die Zusatzinformation zwischen zwei Navigationsinformationen bzw. Richtungsänderungsanzeigen ausgegeben werden, wobei vorgesehen ist, dass die Zusatzinformation als eine Werbeeinblendung bzw. Werbeeinblendungen ausgestaltet werden. So könnte zu Beginn einer Fahrt eine Werbebotschaft in Verbindung mit der Präsentation der Route ausgegeben werden, wobei der dazugehörige auswechselbare Datenträger von dem Werbenden kostenlos oder verbilligt zur Verfügung gestellt werden kann.

Da die Ausgabeeinheit üblicherweise eine Bild- und/oder Tonwiedergabe vorsieht, ist es vorgesehen, dass die Zusatzinformation als Bildeinblendungen und/oder Tonwerke eingespielt werden, so dass unabhängig von der Anzeige während der Fahrt oder während der Orientierung in einer fremden Umgebung eine Werbebotschaft oder Zusatzinformation übermittelt werden kann. Alternativ dazu kann das Richtungssymbol von einem Werbelogo hinterlegt sein bzw. kann ein Teil der Anzeigeeinheit stets eine solche Einblendung aufweisen.

Ein auswechselbarer Datenträger mit Daten für ein Navigationssystem weist vorteilhafterweise entsprechende Zusatzinformationen auf, wobei die Zusatzinformationen neben Hintergrundinformationen oder Sehenswürdigkeiten auch Werbeeinblendungen beinhalten können. Der Datenträger ist vorteilhafterweise als eine CD, DVD oder ein Magnetplattenspeicher ausgebildet.

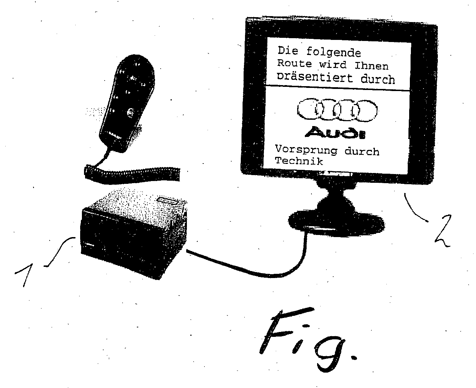

Nachfolgend wird anhand der beigefügten Figur ein Ausführungsbeispiel der Erfindung näher erläutert.

Die Figur zeigt ein Navigationssystem mit einer Ausgabeeinheit.

In der Figur ist ein Datenlese- und Auswertegerät 1 dargestellt, in dem ein auswechselbarer Datenträger, der nicht sichtbar ist, eingelegt ist. Das Datenlese- und Auswertegerät 1 ist mit einer Anzeigeeinheit 2 verbunden, auf der Navigationsinformationen in Gestalt von Pfeilen oder Straßenverläufen ausgegeben werden. Sofern das Navigationssystem nicht in einem Kraftfahrzeug eingebaut ist, sondern von einem Wanderer mitgeführt werden muss, sind die Anzeigeeinheit 2 und das Datenlese- und Auswertegerät 1 zu einer Baueinheit zusammengefasst. Alternativ oder ergänzend zu einer Ausgabeeinheit 2 in Gestalt eines Bildschirmes sind akustische Wiedergabeeinrichtungen vorgesehen, mit denen Anweisungen oder andere Tonwerke übermittelt werden können.

Nach dem Einlegen eines Datenträgers mit Daten für das Navigationssystem, wird über die Ausgabeeinheit 2 eine Zusatzinformation, hier eine Werbebotschaft, ausgegeben. Zweckmäßigerweise erfolgt diese Werbebotschaft zu Beginn einer Fahrt, nachdem die Route berechnet wurde, wobei ein Beispiel für die Werbebotschaft die gegenwärtig beliebte Mitteilung sein kann, dass die Route von einem-bestimmten Unternehmen bzw. von'dem Werbenden präsentiert wird. Eine solche Werbeeinblendung vor Beginn der Routenanzeige verbilligt aufgrund der Werbeeinnahmen den Datenträger selbst und damit das komplette Navigationssystem. Unterstützt werden kann diese Werbeaussage durch Tonwerke, beispielsweise durch Musikuntermalung oder einen Textbeitrag.

Alternativ zu einer Einblendung vor Ausgabe einer Route ist es vorgesehen, dass eine solche Werbeeinblendung bzw.

Zusatzinformationen zwischen zwei Richtungsänderungsanweisungen ausgegeben wird. Das Navigationssystem wird dann von dem Pfeiloder Kartenmodus in den Zusatzinformationsmodus geschaltet und über das Display oder einen Lautsprecher werden die entsprechenden Informationen ausgegeben. Bei einer neuen Fahranweisung oder Richtungsänderungsanweisung wird wieder in den entsprechenden Pfeil- oder Kartenmodus umgeschaltet.

Ebenfalls ist es vorgesehen, dass ein Werbelogo über die Anzeigeeinheit 2 ausgegeben wird, beispielsweise wenn die Datenträger, wie z. B. CD, DVD oder ein Magnetplattenspeicher, von einem Kartenerstellungsunternehmen hergestellt werden. Über die Werbeeinnahmen verbilligen sich die Navigationssysteme bzw. die, Datenträger für die Navigationssysteme, wodurch diese einer breiteren Nutzung zugänglich gemacht werden.

Der Richtungsänderungshinweis des Navigationssystemes kann sich auch auf eine Zusatzinformation oder einen Werbeanbieter beziehen, z.B. "nach der nächsten XY-Tankstelle rechts abbiegen" oder dergleichen.

## Patentansprüche

1. Verfahren zum Betreiben eines Navigationssystems mit einem Datenspeicher, insbesondere einem auswechselbaren Datenspeicher, und einer Ausgabeeinheit (2) für die Ausgabe von Navigationsinformationen, **dadurch gekennzeichnet, dass** zumindest eine von der Navigationsinformation verschiedene Zusatzinformation während des Betriebes des Navigationssystems ausgegeben wird.

2. Verfahren nach Anspruch 1, **dadurch gekennzeichnet, dass** die Zusatzinformation vor Beginn der Ausgabe der Navigationsinformation ausgegeben wird.

3. Verfahren nach Anspruch 1 oder 2, **dadurch gekennzeichnet, dass** die Zusatzinformation zwischen zwei Navigationsinformationen ausgegeben wird.

4. Verfahren nach einem der voranstehenden Ansprüche, **dadurch gekennzeichnet, dass** die Zusatzinformationen Werbeeinblendungen sind.

5. Verfahren nach einem der voranstehenden Ansprüche, **dadurch gekennzeichnet, dass** die Ausgabeeinheit (2) Bild- und/oder Tonwiedergabe vorsieht und dass als Zusatzinformationen Bildeinblendungen und/oder Tonwerke eingespielt werden.

6. Verfahren nach einem der voranstehenden Ansprüche, **dadurch gekennzeichnet, dass** sich die Navigationsinformationen-auf die Zusatzinformationen oder einen Werbenden beziehen oder Werbeeinblendungen beinhalten.

7. Datenträger mit Daten für ein Navigationssystem, insbesondere Satellitennavigationssystem, **dadurch gekennzeichnet, dass** auf dem Datenträger Zusatzinformationen neben Navigationsinformationen gespeichert sind.

8. Datenträger nach Anspruch 7, **dadurch gekennzeichnet, dass** die Zusatzinformationen Werbeeinblendungen sind.

9. Datenträger nach Anspruch 7 oder 8, **dadurch gekennzeichnet, dass** der Datenträger eine CD, DVD oder eine Magnetspeicherplatte ist.
